# EUROPEAN PATENT APPLICATION

(11) **EP 4 563 345 A1**
(43) Date of publication of application: **04.06.2025**
(21) Application number: 24216365.7
(22) Date of filing: 29.11.2024
(51) Int. Cl.: B32B 27/08, C08J 5/18, B32B 27/18

(54) **RECYCLABLE SHRINK FILMS WITH LINEAR SHRINK CURVES**

(30) Priority: 30.11.2023 US 202318525170
(71) Applicant: Klöckner Pentaplast of America, Inc., Gordonsville, VA 22942 (US)
(72) Inventor: Brandon, Matthew, Lewisville, NC (US); Vogan, Mark, Spotsylvania, VA (US); Habrich, Christian, Wytheville, VA (US); Pham, Luan, Buford, GA (US)
(74) Representative: Hoffmann Eitle

(57) **Abstract**

In various examples, the subject matter of this disclosure relates to heat shrinkable films substantially linear heat shrink curves. The gradual and controlled increase in heat shrinkage with an increase in temperature gives rise to preferred characteristics for disclosed heat shrinkable films.

## Description

### FIELD

The present invention relates to heat shrinkable films. More particularly, the present invention relates to heat shrinkable films for shrink-to-fit labelling of packaging, such as food and drink packaging.

### BACKGROUND

Heat shrinkable films are known and commercially available for example to cover and protect articles, to hold articles together, to label articles and to provide tamper-evident protection.

Polyvinyl chloride (PVC) and polystyrene (PS), especially orientated polystyrene (OPS), are commonly used to produce heat shrinkable films. Typically, the polymeric material is prepared, extruded into a film, biaxially and/or monoaxially stretched and rolled into rolls. At the packers facility, the film is unfolded, printed, seamed to form a tube and applied around an article. The film is then heated to a shrink temperature so that it shrinks back to fit tightly around the article. In some applications, the container contains food or drink before labelling; in other applications, the shrink label is applied on an empty container. The heat shrinkable film may have a relatively high shrink rate and stress, as the content will prevent the container from deforming under the pressure of the shrinking film. However, it is often not desirable or possible to expose a filled container, even partially, to heat, as this may spoil the food/drink products. However, without content, heat shrinkable films having a high shrink rate and stress will tend to deform or crush the empty containers. With relatively low shrink onset temperatures and low shrink rate and stress, PVC and OPS have been the preferred materials for the production of shrink films. However, these materials are not commonly recyclable, and where they are, the recycling process requires the separation of the PVS or OPS films from containers made from a different material before each material type can be recycled. Therefore, PVC and OPS shrink films are incompatible with the noticeable shift in and beyond the industry towards environmentally friendly solutions.

Polyethylene terephthalate (PET) is commonly used in the food and drink packaging industry. In particular, amorphous polyethylene terephthalate (APET) is favored for its versatility, clarity and recyclability, and is frequently used to manufacture food and drink containers (including for example food trays and containers, bowls, cups and bottles). Therefore, a "monopolymer packaging" comprising a PET bottle with a PET shrink film is advantageous. However, in order to be suitable for shrink film applications, the ability of APET to crystallize must be reduced. Glycol-modified polyethylene terephthalate (commonly referred to as "PET-G" and "PETG") has a suitably low crystallinity; however, with relatively high shrink rates and stress, it is unsuitable for the effective wrapping/labelling of empty containers.

### SUMMARY

It is thus an object of the present invention to mitigate problems such as those described above and to provide an improved alternative to existing products. In particular, it is an object of the present invention to provide an environmentally friendly heat shrinkable film with shrink properties suitable for use on empty or less rigid containers.

According to one aspect, there is provided a recyclable, heat shrinkable film comprising a copolyester comprising a diol component and a dicarboxylic acid component. In embodiments, the diol component is selected from at least one member from the group consisting of ethylene glycol, diethylene glycol, neopentyl glycol, propylene glycol, polyethylene glycol, tetraethylene glycol, and cyclohexane dimethanol. In embodiments, the dicarboxylic acid component is selected from at least one member of the group consisting of isophthalic acid and terephthalic acid.

In embodiments, the heat shrinkable film has an A-B-A structure, with the "A" layers as surface layers and the "B" layer as a core layer between the A surface layers.

According to another aspect, there is provided a recyclable, heat shrinkable film characterized by a heat shrink curve corresponding to shrinkage percentage in a main shrinkage direction as a function of isothermal hold in water for 10 seconds, the heat shrink curve having a gradual slope. In embodiments, the slope is less than 2.0 at all 5 °C increments between 65°C and 95°C.

According to another aspect, there is provided a recyclable, heat shrinkable film characterized by a heat shrink curve corresponding to shrinkage percentage in a main shrinkage direction as a function of temperature hold in water for 10 seconds, the heat shrink curve having an approximately linear shape. In embodiments, a linear regression analysis of the curve yields a squared Pearson correlation coefficient of at least 0.95 for the overall curve between 60°C and 95°C.

According to another aspect, there is provided a recyclable, heat shrinkable film characterized by a low shrink velocity. In embodiments, the shrink velocity is 10% per second or less when measured in air at 85°.

According to another aspect, there is provided a method of manufacturing a heat shrinkable film having a heat shrink curve with a gradual slope and an approximately linear shape at temperatures between 60°C and 95°C. The method comprises the steps of preparing the copolyester from constituent resins, extruding to yield an unstretched film, and further extruding the film in a tenter frame extrusion process comprising a drawing zone and an annealing zone. In embodiments, the temperature within the annealing zone is higher than the temperature within the drawing zone.

According to yet another aspect, there is provided a method of applying a heat shrinkable film as described above. The method comprises the steps of applying the film onto and/or around an article, and heating the film up to at least its shrink onset temperature.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention. In the following description, various embodiments of the present invention are described with reference to the following drawings, in which:
FIG. 1 is a schematic, perspective view of a heat shrinkable film, in accordance with certain embodiments.
FIG. 2 is a schematic, perspective view of a shrink sleeve formed from a heat-shrinkable film, in accordance with certain embodiments.
FIG. 3 is a schematic diagram of a process for manufacturing a heat-shrinkable film, in accordance with certain embodiments.
FIG. 4 is a schematic diagram of a process for recycling a heat-shrinkable film, in accordance with certain embodiments.
FIG. 5 is a plot of shrink percentage as a function of isothermal hold temperature in water for 30 seconds, in accordance with certain embodiments.
FIG. 6 is a plot of shrink percentage as a function of isothermal hold temperature in water for 10 seconds, in accordance with certain embodiments.
FIG. 7 is a plot of shrink velocity as a function of time in air at 85°C, in accordance with certain embodiments.
FIG. 8 is a plot of shrink velocity as a function of time in air at 105°C, in accordance with certain embodiments.

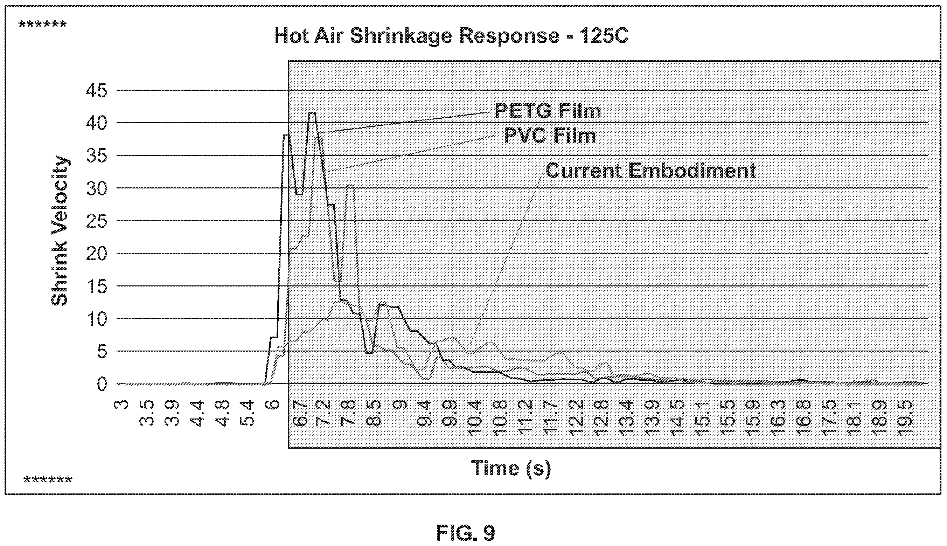

FIG. 9 is a plot of shrink velocity as a function of time in air at 125°C, in accordance with certain embodiments.

### DETAILED DESCRIPTION

It is contemplated that apparatus, compositions, systems, and methods of the claimed invention encompass variations and adaptations developed using information from the embodiments described herein. Adaptation and/or modification of the apparatus, compositions, systems, and methods described herein may be performed by those of ordinary skill in the relevant art. In contrast to conventional heat shrinkable films, when the shrink rate of the films described herein in the main shrinkage direction are plotted as a function of temperature, the resulting curve is substantially more linear. Moreover, the slope of the shrink rate-temperature curves of embodiments of the films described herein are generally lower than conventional shrinkable films. This gradual and controlled increase in heat shrinkage with an increase in temperature gives rise to preferred characteristics for heat shrinkable films.

In various examples, "shrink rate" (alternatively referred to as "shrink percentage") is the amount of shrinkage undergone by a heat shrinkable film in an indicated direction during a shrinking step, expressed as a percent of shrinkage compared to the film size in that direction prior to the shrinking step. ASTM D-2732, Standard Test Method for Unrestrained Linear Thermal Shrinkage of Plastic Film and Sheeting, may be used to determine the shrink rates of the films described herein.

In various examples, "shrink stress" (alternatively referred to as "shrink force") is a tension, force, or stress (e.g., force per area) exerted by a heat shrinkable film during a shrinking step. While high shrink stress films may be suitable for rigid articles, a lower shrink stress can be desirable for articles that are flexible, prone to deformation, and/or empty. Further, printed low shrink stress films have been observed to exhibit improved shrinking performance (e.g., a lower risk of discoloration, color concentration, printed image deformation, and label defects). Shrink stress can be measured using ASTM D2838, DIN 53369:1076-02, or similar techniques. In one example, the shrink stress can be a maximum tension exerted by a heat shrinkable film over a range of temperatures.

In various examples, "shrink onset temperature" is a temperature at which a heat shrinkable film begins to shrink. A lower shrink onset temperature can be desirable to minimize deformation or damage to articles upon which the films are applied. In the case of a plastic article, such as a polyethylene terephthalate (PET) bottle, the shrink onset temperature of the heat shrinkable film is preferably substantially lower than a glass transition temperature of the article, to avoid or minimize any deformation of the article. In addition, the shrink onset temperature of the film is preferably low enough to not damage or spoil any contents in the articles. The shrink onset temperature can be measured using ASTM-D-2732 or similar techniques.

In certain examples, "intrinsic viscosity" (IV) is a characteristic of a polymer from which a shrink film is made. IV can be dependent upon an average molecular weight of the polymer, for example, with higher molecular weights resulting in higher IV. In some instances, a lower IV can be associated with a lower shrink stress. IV can be measured using ASTM D4603-03 or similar techniques.

In various examples, "glass transition temperature" (Tg) is a temperature at which an amorphous polymer transitions from a glass-like state to a rubbery state. The Tg value can affect many physical properties of a polymer and, in particular, a decrease in the glass transition temperature can result in a decrease in the shrink onset temperature. In some instances, however, a Tg that is too low can result in the film being sticky or tacky and unsuitable for packaging purposes. The glass transition temperature can be determined using thermomechanical analysis (TMA), dynamic mechanical analysis (DMA), differential scanning calorimetry (DSC), or similar techniques.

In general, a heat shrinkable film is a film that tends to shrink upon application of heat or when exposed to elevated temperatures (e.g., at or above the shrink onset temperature). Heat shrinkable films can be used to form labels for a variety of containers, such as bottles, cap seals, or bundle packaging. For example, ink can be printed onto a heat shrinkable film to generate images and/or text. The printed heat shrinkable film can be formed into a tubular sleeve and placed over a container. When heat is applied, the sleeve can shrink to achieve a tight fit over the container. The container can be filled with a desired product (e.g., a beverage) and sold to consumers. Heat shrinkable films and related methods of manufacture are described in International Patent Application Publication No. WO 2022/072477, published April 7, 2022, the entire disclosure of which is incorporated herein by reference.

After use, the container and label can be subjected to a recycling process in which the container and label are crushed, chopped, and/or shredded into flakes or particles. The particles can be cleaned or de-inked by exposing the particles to a hotwash process. The cleaned particles can be subjected to a drying and/or solid-stating process in which the particles are heated to remove water, make the particles crystallizable, and/or increase a molecular weight for the particles. In some instances, however, the high temperature of the drying and/or solid-stating process can make the particles sticky, which can cause the particles to form clumps. The clumps can block filters or screens and/or can form bridges that prevent proper flow of materials in the recycling process.

A wide variety of polymeric materials can be used to make heat shrinkable films. For example, polyvinyl chloride (PVC) and polystyrene (PS), especially orientated polystyrene (OPS), are commonly used to produce heat shrinkable films. PVC and OPS may provide low shrink onset temperatures and low shrink stress; however, PVC and OPS films are generally not easy to recycle. For example, PVC and OPS films are often used with containers made from different materials, and proper recycling can require the different material types to be separated.

Polyethylene terephthalate (PET) is commonly used in the food and drink packaging industry to produce containers and heat shrinkable films. Amorphous polyethylene terephthalate (APET) is favored for its versatility, clarity and recyclability, and is frequently used to manufacture food and drink containers (e.g., including food trays, bowls, cups, and bottles). To be suitable for shrink film applications, however, the tendency for APET to crystallize may need to be reduced. Glycol-modified PET (commonly referred to as a copolyester, "PET-G," or "PETG") can have a suitably low crystallinity, however, films made from PETG can become sticky during a recycling process, as described herein, particularly when the shrink onset temperature and shrink stress are low. This can make such films difficult or impossible to recycle.

Advantageously, compared to previous films having a low shrink stress, the heat shrinkable films described herein are less likely to become sticky and/or form clumps during the recycling process. For example, the films can be mixed with similar materials (e.g., PET bottle flakes) and, unlike the previous films, can be subjected to solid-stating and other recycling steps without forming clumps that can form blockages or otherwise interfere with a proper flow of materials.

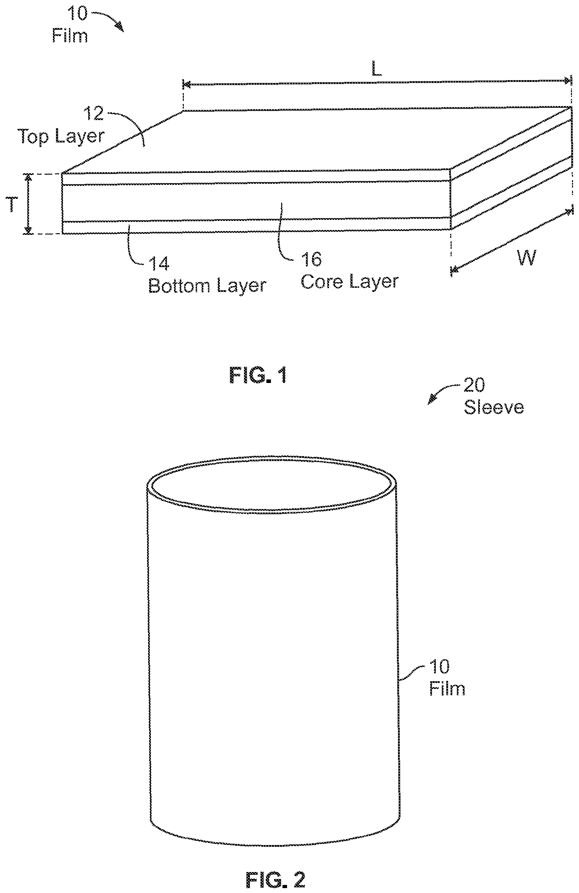

FIG. 1 is a schematic, perspective view of a heat shrinkable film 10, in accordance with certain examples. In these embodiments, the heat shrinkable film has an A-B-A structure, with the "A" layers as top and bottom surface layers and the "B" layer as a core layer between the A surface layers. As depicted in FIG. 1, the heat shrinkable film 10 includes a top layer 12, a bottom layer 14, and a core layer 16 disposed between (e.g., bonded to) the top layer 12 and the bottom layer 14. In various examples, the top layer 12, the bottom layer 14, and the core layer 16 each includes or is composed of a polyester, such as PET, APET, one or more copolyesters (alternatively referred to as copolymerized polyesters or PETG), or a combination thereof. Each polyester and copolyester can have a diol component and a dicarboxylic acid component and can be formed by subjecting the diol component and the dicarboxylic acid (DA) component to a transesterification reaction followed by polymerization. The diol component for certain polyesters (e.g., APET) can be or include ethylene glycol (EG). In embodiments, one or both of the surface layers comprise an anti-blocking additive and/or a topical anti-static additive or coating.

The diol component in copolyester can be composed of or include, for example, ethylene glycol (EG), diethylene glycol (DEG), neopentyl glycol (NPG, e.g., 2-dimethylpropane-1,3-diol), propylene glycol (PPG), cyclohexanedimethanol (CHDM, e.g., 1,4-cyclohexanedimethanol), tetraethylene glycol (TEG), 1,3-propanediol, 2-butyl-2-ethyl-1,3-propanediol, 2,3-butanediol, 1,3-butanediol, 1,4-butanediol, 1,5-pentanediol, 2,2-diethyl-1,5-pentanediol, 2,4-diethyl-1,5-pentanediol, 3-methyl-1,5-pentanediol, 1,1-dimethyl-1,5-pentanediol, 1,2-octanediol, 1,3-octanediol, or any combination thereof. In embodiments, the approximate composition of the diol component in the copolymerized polyester resin used for the film contains from 50 mol% to 85 mol% of ethylene glycol, 10 mol% to 30 mol% of cyclohexane di-methanol, and 5 mol% to 25 mol% of diethylene glycol with total amount of glycol in film formulation is 100 mol%. In some examples, the inclusion of NPG in the diol component can provide a higher shrink force, desirable shrinkage characteristics, and/or good anti-clumping performance (e.g., acceptable performance in the clumping performance test, described herein). NPG can have a lower cost than other types of diol components. The inclusion of CHDM and/or DEG in the diol component can provide a lower shrink force and desirable shrinkage characteristics; however, inclusion of too much CHDM and/or DEG may result in inadequate or poor anti-clumping performance. The inclusion of EG in the diol component can provide good anti-clumping performance but a large amount may result in relatively poor shrinkage characteristics. In various examples, it can be desirable for a film to have higher shrinkage in a transverse direction, compared to a machine direction.

The dicarboxylic acid (DA) component in the copolyester can be composed of or include, for example, terephthalic acid (TA), isophthalic acid (IPA), dimethylterephthalic acid, naphthalene dicarboxylic acid, orthophthalic acid, an aromatic dicarboxylic acid, adipic acid, azelaic acid, sebacic acid, decanedicarboxylic acid, an aliphatic dicarboxylic acid, or an alicyclic dicarboxylic acid. In one example, the dicarboxylic acid component in the polyester and the copolyester is terephthalic acid (TA) or an ester thereof. In embodiments, the dicarboxylic acid component in the copolymerized polyester resin used for the film contains from 0.05 mol% to 0.8 mol% of isophthalic acid, and 99.0 mol% to 100 mol% of terephthalic acid.

In embodiments, the films described herein are made from a blend of amorphous and crystallized resin material. In embodiments, the amorphous resin has a T_{g} of up to about 75°C, and an intrinsic viscosity of from about 0.65 dl/g to about 0.85 dl/g. In embodiments, the crystallized resin has a T_{g} of up to about 80°C and an intrinsic viscosity of from about 0.70 dl/g to about 0.85 dl/g. In embodiments, the T_{g} of the overall film is up to about 80°C. In embodiments, 60 mol% to 90 mol% of the overall film is made from amorphous resin. In embodiments in which the films described herein are characterized by an A-B-A structure, the surface "A" layers are preferably slightly less crystalline to optimize solvent seaming processes.

Referring again to FIG. 1, the heat shrinkable film 10 can have a thickness T, a length L, and a width W. The thickness T can be, for example, from about 15 microns to about 100 microns. In various examples, the core layer 16 can occupy from about 50% to about 90% of the total thickness T. The top layer 12 and the bottom layer 14 can occupy a remainder of the total thickness T and/or can have equal thicknesses. For example, the top layer 12 and the bottom layer 14 can each occupy from about 5% to about 25% of the total thickness T. The length L and the width W can vary depending on a manufacturing process, a packaging process, and/or on how the film 10 is being utilized. For example, a web of the heat shrinkable film 10 in a manufacturing process can have a width W up to about 20 m, and the web can be slit into narrower ribbons having widths W as low as about 0.01 m. Alternatively, for particles of the heat shrinkable film 10 in a recycling process, as described herein, the length L and/or width W (or diameter for circular particles) can be from about 1 mm to about 50 mm, or from about 3 mm to about 15 mm.

In various examples, one or more layers or materials can be disposed on the top layer 12 or the bottom layer, between the top layer 12 and the core layer 16, or between the bottom layer 14 and the core layer 16. For example, a coating, primer, or ink (e.g., a printed image or text) can be applied to the film 10. The top layer 12 and/or the bottom layer 14 can serve as contact media to be printed with a washable primer and/or washable ink, which can be removed during a recycling process, as described herein. The top layer 12 and the bottom layer 14 can be formulated to not clump together with PET flakes when exposed to high temperatures in the recycling process. The core layer 16 can provide desirable shrink properties, such as low shrink force and low shrink onset temperature.

The heat shrinkable film 10 can have any shape and does not need to be flat and rectangular, as shown in FIG. 1. For example, referring to FIG. 2, the heat shrinkable film 10 can be formed into a shrink sleeve 20 having a tubular shape (e.g., by creating a seam with a solvent). The shrink sleeve 20 can be placed over a bottle (or other container) and can shrink to form a tight fit around the bottle when heat is applied (e.g., using steam, hot-air, microwave energy, or infrared radiation).

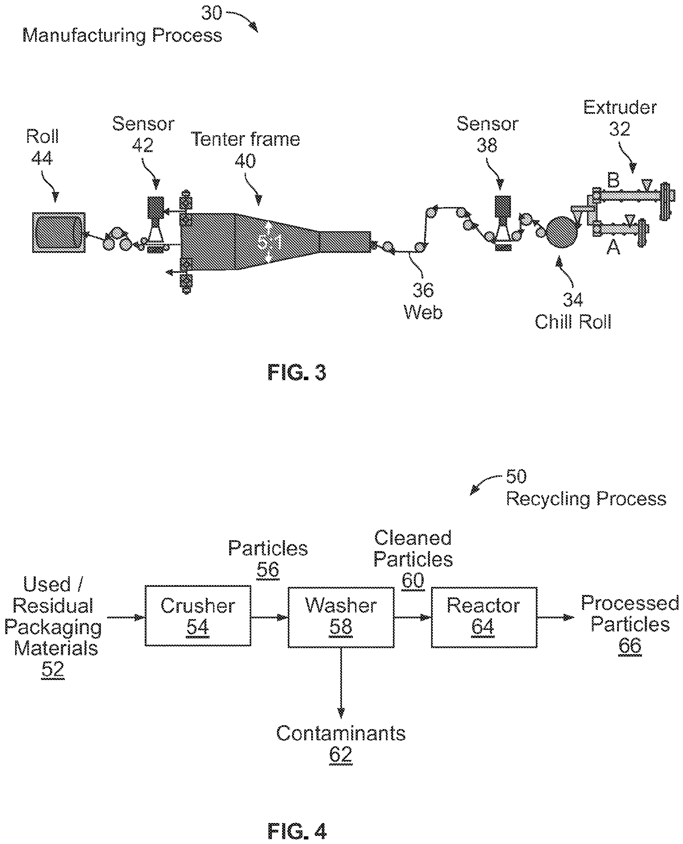

FIG. 3 is a schematic diagram of a manufacturing process 30 that can be used to manufacture heat shrinkable films (e.g., the heat shrinkable film 10), in accordance with certain examples. One or more extruders 32 can be used to coextrude three layers (e.g., the top layer 12, the bottom layer 14, and the core layer 16) for a heat shrinkable film. The processing temperature for the extruders 32 can be from about 200 °C to about 300 °C. The three layers are cast onto a chill roll 34, which cools and solidifies the film. A web 36 of the film is inspected by one or more quality control sensors 38 and is delivered to a tenter frame 40. The tenter frame 40 can stretch the film to a stretch ratio from about 1.5 to about 7, or about 5, in a transverse direction (perpendicular to a machine direction). Additionally or alternatively, one or more downstream rollers can stretch the film in the machine direction by pulling the web at a faster speed, compared to a speed of an upstream roller. The stretching can be performed at or above a glass transition temperature T_{g} of the heat shrinkable film or one or more layers of the film. For example, the stretching can be performed at a temperature from about T_{g} to about T_{g} + 10 °C or +15 °C. One or more quality control sensors 42 can inspect the stretched film, which can be wound up to form a roll 44. In embodiments, the process includes an annealing step after the film is stretched, with the annealing temperature being above the temperature at which stretching is performed. In embodiments, annealing occurs at a temperature in the range T_{g} +10 °C to T_{g} +25 °C.

In subsequent steps (not shown), the heat shrinkable film can be unwound from the roll 44 and passed through a printing process that applies ink to the heat shrinkable film. In some examples, one or more intermediate layers can be applied between the heat shrinkable film and the ink. For example, a primer that can be dissolved or stripped by a caustic soda can be applied to the heat shrinkable film before the ink is applied. The primer can facilitate removal of the ink during a subsequent hotwash process, as described herein. Additionally or alternatively, the heat shrinkable film can be formed into a tubular shape (e.g., to form the sleeve 20) and/or cut to desired sizes.

FIG. 4 is a schematic diagram of a recycling process 50 that can be used to recycle heat shrinkable films (e.g., the heat shrinkable film 10). The process 50 can begin by obtaining used or residual packaging materials 52, including heat shrinkable films and other recyclable materials, such as PET containers or bottles. The residual packaging materials 52 are provided to a crusher 54, which can crush, chop, and/or shred the packaging materials 52 to obtain particles 56 of those materials. In various examples, the particles 56 can include particles of a heat shrinkable film that are at least partially covered with ink.

The particles 56 are provided to a washer 58, which can clean the particles 56 using a hotwash process in which the particles 56 are immersed, mixed, and/or scrubbed in a warm liquid bath. The liquid bath can include water, a caustic soda (e.g., in an amount from about 0.1% to about 5%, by weight), a detergent (e.g., in an amount from about 0.1% to about 3%, by weight), and other ingredients (e.g., a defoamer or anti-foaming agent). The liquid bath can have a temperature from about 55 °C to about 95 °C, or about 85 °C. The washer 58 can have a mixing device (e.g., a rotary blade operating at 500 rpm) to mix or stir the particles 56 in the liquid bath. Outputs from the washer 58 can include cleaned particles 60 of heat shrinkable films (e.g., having little or no ink) and a stream of ink, dirt, or other contaminants 62.

The cleaned particles 60 can be provided to an oven or reactor 64 where the particles are heated to a temperature from about 170 °C to about 230 °C (e.g., at reduced pressure) to perform a drying and solid-stating process. The drying and solid-stating process can remove water, crystallize the particles 60, and/or increase a molecular weight for the particles 60. The reactor 64 can generate processed particles 66, which can be used to form recycled products, such as new heat shrinkable films, containers, etc. In certain implementations, the oven or reactor 64 can include multiple ovens or reactors and/or can process the cleaned particles 60 in two or more stages, which can include, for example, (i) a drying and crystallization stage and (ii) a solid-stating stage. The drying and crystallization stage can be performed at a temperature from about 130 °C to about 190 °C, for up to about 180 mins. The drying and crystallization stage can be performed at atmospheric pressure or at reduced pressure. The solid-stating stage can be performed at a temperature from about 170 °C to about 230 °C, for about 90 mins or longer to achieve a desired molecular weight. The solid-stating stage can be performed at reduced pressure (e.g., below atmospheric) and/or in a nitrogen environment to avoid oxidation.

As described herein, in some examples the high temperature in the reactor 64 can make the particles 60 sticky, which can cause the particles 60 to bond to one another or other materials (e.g., PET bottle flakes) and form clumps. The formation of clumps can block filters or screens and/or can form bridges that prevent proper flow of materials through the recycling process 50. Advantageously, compared to previous low shrink force heat shrinkable films, the heat shrinkable films described herein (e.g., film 10) are less likely to become sticky and/or form clumps during the recycling process 50, such that the films have improved recyclability. For example, particles of the heat shrinkable films described herein may not melt and/or become tacky or sticky when subjected to temperatures and pressures inside the oven or reactor 64. In various examples, the heat shrinkable films described herein are formulated to resist bonding to other materials when heated to temperatures from about 170 °C to about 230 °C, or about 210 °C.

The heat shrinkable films described herein are characterized by unique heat shrinkage amounts. Shrinkage rate is expressed herein in terms of the percent shrinkage in the machine direction or "MD," which is the direction in which the film is stretched over rollers following extrusion, and the transverse direction or "TD," which is also referred to as the main shrinkage direction because the film will primarily shrink in the TD direction when heated after the film is formed. In contrast to conventional heat shrinkable films, when the TD shrink percentage of the films described herein are plotted as a function of temperature, the resulting curve, referred to herein as the "TD shrink rate-temperature curve," is more linear. In embodiments, when a linear regression analysis is performed to such TD shrink rate-temperature curves for temperatures between 60°C and 95°C, the resulting squared Pearson correlation coefficient is greater than 0.93, 0.94, 0.95, 0.96, 0.97, 0.98, or 0.99.

Moreover, the slope of the TD shrink rate-temperature curves of embodiments of the films described herein are generally lower than conventional shrinkable films, preferably less than 2.0 at all 5 °C increments between 65°C and 95°C.

In embodiments, the heat shrinkable films described herein are characterized by a heat shrinkage rate of from 0.25% up to 1.0% in the main shrinkage direction when held in water at a temperature of 65°C for 10 seconds.

In embodiments, the heat shrinkable films described herein are characterized by a heat shrinkage rate of from 3.0% up to 5.0% in the main shrinkage direction when held in water at a temperature of 70°C for 10 seconds.

In embodiments, the heat shrinkable films described herein are characterized by a heat shrinkage rate of from 11% up to 15% in the main shrinkage direction when held in water at a temperature of 75°C for 10 seconds.

In embodiments, the heat shrinkable films described herein are characterized by a heat shrinkage rate of from 15% up to 25% in the main shrinkage direction when held in water at a temperature of 80°C for 10 seconds.

In embodiments, the heat shrinkable films described herein are characterized by a heat shrinkage rate of from 25% up to 35% in the main shrinkage direction when held in water at a temperature of 85°C for 10 seconds.

In embodiments, the heat shrinkable films described herein are characterized by a heat shrinkage rate of from 25% up to 45% in the main shrinkage direction when held in water at a temperature of 90°C for 10 seconds.

In embodiments, the heat shrinkable films described herein are characterized by a heat shrinkage rate of from 40% up to 50% in the main shrinkage direction when held in water at a temperature of 95°C for 10 seconds.

### Examples - Film Shrinkage in Water

Waterbath shrinkage testing is used as a standard type of shrinkage performance quantification within the industry. Typical testing is performed in isothermal waterbaths from 50°C-100°C using dwell times from 10s-1min depending on the intended application. The testing and observations set forth below pertain to the waterbath shrinkage testing performance of embodiments described herein compared to commercially available PETG and PVC films. Waterbath shrink performance characteristics were tested using the industry standard water bath test method ( ASTM D-2732) at both 30 second and 10 second dwell times.

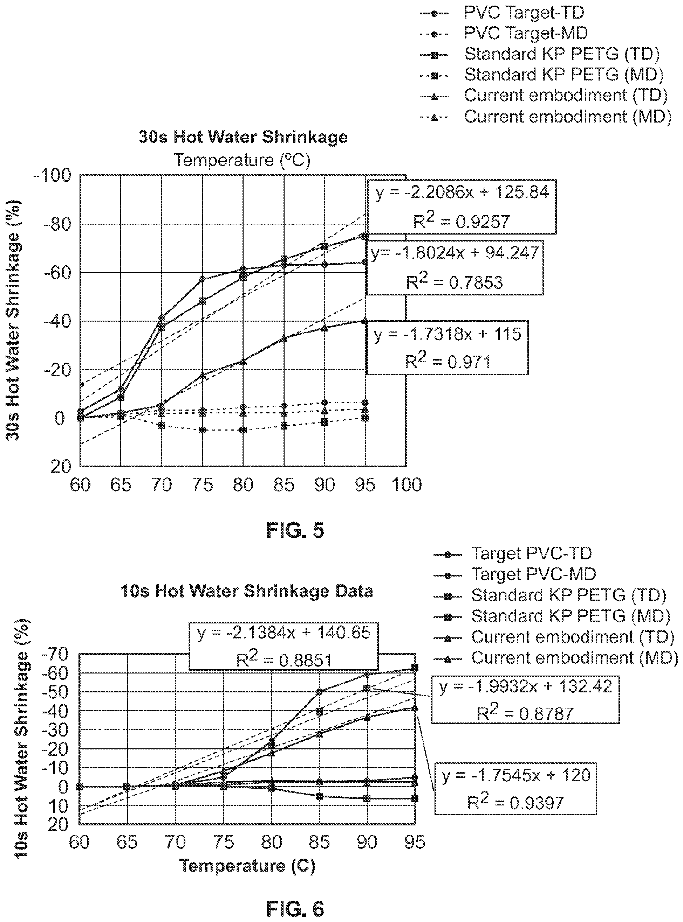

Shrink rate-temperature curves for both the TD and MD directions for waterbath temperatures at 65°C-95°C at 5°C increments, with 30 and 10 second dwell times are provided in FIG. 5 and FIG. 6, respectively. Data is shown for PVC film, PETG film, and two examples of films according to embodiments described herein. The data were averaged and fit with a linear trendline and correlation coeffient. When comparing the new film against standard film offerings we find that the shrinkage curve is significantly more linear in shrink behaviour, as seen in the higher R² values, or correlation coefficients of 0.93 or higher. The shrinkage curves for PVC and PETG also have a higher slope values than the curves for embodiments of the films described herein, which have slopes in the TD or main shrinkage direction of less than 2.0 at each 5°C increment. The rate of increase in the heat shrinkage rate in the TD range in the temperature range of 0.35×Tₘ°C to 0.40×Tₘ∘C is from 1%/°C to 4%/°C; the rate of increase in the temperature range of 0.45×Tₘ° C to 0.50×Tₘ° C is from 0.30%/°C to 0.70%/°C (where Tₘ is the melting temperature of the film).

### Examples - Film Shrinkage in Air

Compared with testing in waterbaths, test data using the Modified ISO 14616 test method shows a better alignment with film decoration performance in a hot air/dry application tunnel. Hot air shrinkage testing was conducted using a conventional hot air shrink force test machine that creates a shrinkage curve by inserting up to six individually prepared film samples into a controlled hot air environment and monitoring the films shrinkage characteristics such as film shrinkage and shrink force with respect to time. The shrinkage value is expressed in as percentage value and the shrink force is represented in newtons (N). The continuous data is collected roughly every 0.3 to 0.4s for each individual testing station. The method for data collection was modified to have t=0s represent the time at which samples begin movement into the heated chamber instead of when samples were fully immersed in the heating chamber. This modification was required to identify material behavior at higher temperatures which force the samples to begin shrinking before being fully immersed. In the following graphs, t=6s is the approximate time in which the samples are fully immersed in the heating chamber. Testing was conducted at a multitude of temperatures from 85°C-125°C to better characterize the performance variations that are observed in downstream hot air/heat tunnel applications. The data collected in this testing was then subject to a point-to-point derivative calculation with respect to time in order to characterize the shrinkage as an instantaneous shrink speed/velocity, calculated as (S2-S1)/(t2-t1) where t1 and t2 are times 1 and 2, respectively, and S1 and S2 are shrink percentages at t1 and t2, respectively. The shrink velocity of the individual stations was then averaged across all samples to provide a curve of the average shrink velocity per each material.

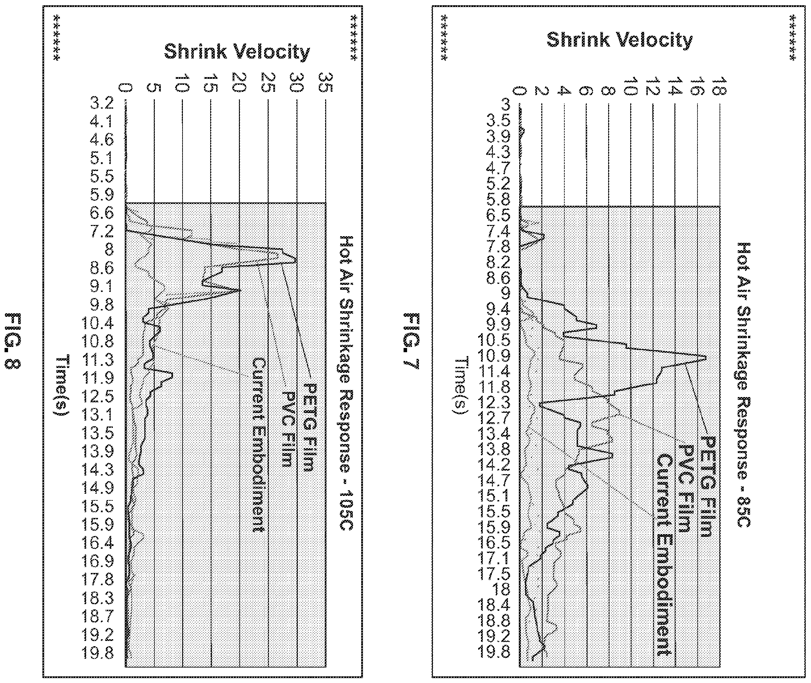

FIG. 7 is a graph of shrinkage velocity at 85°C in air as a function of time for PVC film, PETG film, and an example film according to an embodiment described herein. Of these films, standard PETG film had the highest peak shrink velocity and highest curve slope (corresponding to shrink acceleration). This indicates that that that the film rapidly shrinks in comparison to the PVC film and the film according to an embodiment described herein.

FIG. 8 is a graph of shrinkage velocity at 105°C in air as a function of time for PVC film, PETG film, and an example film according to an embodiment described herein. The shrink velocities experienced by all films were higher than at 85°C. While the standard PVC films behavior appears similar to PETG film, it sharts shrinking slightly before and has a slightly lower slope value. The film according to an embodiment described herein has a relatively low and stable shrink velocity, which is comparable to standard PVC when tested at 85°C. As testing temperatures get higher in temperature, shrink film shrink velocity curves grow higher and more steep, which translates to a more narrow decoration window for successful application.

### Terminology

The phraseology and terminology used herein is for the purpose of description and should not be regarded as limiting.

The term "approximately", the phrase "approximately equal to", and other similar phrases, as used in the specification and the claims (e.g., "X has a value of approximately Y" or "X is approximately equal to Y"), should be understood to mean that one value (X) is within a predetermined range of another value (Y). The predetermined range may be plus or minus 20%, 10%, 5%, 3%, 1%, 0.1%, or less than 0.1%, unless otherwise indicated.

The indefinite articles "a" and "an," as used in the specification and in the claims, unless clearly indicated to the contrary, should be understood to mean "at least one." The phrase "and/or," as used in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used shall only be interpreted as indicating exclusive alternatives (i.e., "one or the other but not both") when preceded by terms of exclusivity, such as "either," "one of," "only one of," or "exactly one of." "Consisting essentially of," when used in the claims, shall have its ordinary meaning as used in the field of patent law.

As used in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

The use of "including," "comprising," "having," "containing," "involving," and variations thereof, is meant to encompass the items listed thereafter and additional items.

Use of ordinal terms such as "first," "second," "third," etc., in the claims to modify a claim element does not by itself connote any priority, precedence, or order of one claim element over another or the temporal order in which acts of a method are performed. Ordinal terms are used merely as labels to distinguish one claim element having a certain name from another element having a same name (but for use of the ordinal term), to distinguish the claim elements.

Each numerical value presented herein, for example, in a table, a chart, or a graph, is contemplated to represent a minimum value or a maximum value in a range for a corresponding parameter. Accordingly, when added to the claims, the numerical value provides express support for claiming the range, which may lie above or below the numerical value, in accordance with the teachings herein. For numerical ranges recited herein, various embodiments include any parameter value (e.g., integer or decimal value) within the cited ranges. For example, if a recited range is from 1 to 10, a value for the respective parameter can be greater than, less than, or equal to 1, 2, 3, ... 9, or 10. Absent inclusion in the claims, each numerical value presented herein is not to be considered limiting in any regard.

The terms and expressions employed herein are used as terms and expressions of description and not of limitation, and there is no intention, in the use of such terms and expressions, of excluding any equivalents of the features shown and described or portions thereof. In addition, having described certain embodiments of the invention, it will be apparent to those of ordinary skill in the art that other embodiments incorporating the concepts disclosed herein may be used without departing from the spirit and scope of the invention. The features and functions of the various embodiments may be arranged in various combinations and permutations, and all are considered to be within the scope of the disclosed invention. Accordingly, the described embodiments are to be considered in all respects as only illustrative and not restrictive. Furthermore, the configurations, materials, and dimensions described herein are intended as illustrative and in no way limiting. Similarly, although physical explanations have been provided for explanatory purposes, there is no intent to be bound by any particular theory or mechanism, or to limit the claims in accordance therewith.

## Claims

1. A heat shrinkable film comprising a copolyester comprising a diol component and a dicarboxylic acid component,
wherein the diol component is selected from at least one member from the group consisting of ethylene glycol, diethylene glycol, neopentyl glycol, propylene glycol, polyethylene glycol, tetraethylene glycol, and cyclohexane dimethanol;
wherein the dicarboxylic acid component is selected from at least one member of the group consisting of isophthalic acid and terephthalic acid;
wherein 60-90 mol% of the copolyester is amorphous; and
wherein the film is **characterized by** a heat shrink curve corresponding to shrinkage percentage in a main shrinkage direction as a function of temperature hold for 10 seconds, the heat shrink curve having a slope of less than 2.0 at all 5 °C increments between 65°C and 95°C.

2. The heat shrinkable film of claim 1, wherein the heat shrink curve is **characterized by** a squared Pearson correlation coefficient of at least 0.95 between 60°C and 95°C.

3. The heat shrinkable film of claim 1, wherein the film is **characterized by** a heat shrinkage rate of up to 1.0% in the main shrinkage direction at a temperature hold of 65°C for 10 seconds.

4. The heat shrinkable film of claim 1, wherein the film is **characterized by** a heat shrinkage rate of 3.0-5.0% in the main shrinkage direction at a temperature hold of 70°C for 10 seconds.

5. The heat shrinkable film of claim 1, wherein the film is **characterized by** a heat shrinkage rate of 11-15% in the main shrinkage direction at a temperature hold of 75°C for 10 seconds.

6. The heat shrinkable film of claim 1, wherein the film is **characterized by** a heat shrinkage rate of 15-25% in the main shrinkage direction at a temperature hold of 80°C for 10 seconds.

7. The heat shrinkable film of claim 1, wherein the film is **characterized by** a heat shrinkage rate of 25-35% in the main shrinkage direction at a temperature hold of 85°C for 10 seconds.

8. The heat shrinkable film of claim 1, wherein the film is **characterized by** a heat shrinkage rate of 25-45% in the main shrinkage direction at a temperature hold of 90°C for 10 seconds.

9. The heat shrinkable film of claim 1, wherein the film is **characterized by** a heat shrinkage rate of 40-50% in the main shrinkage direction at a temperature hold of 95°C for 10 seconds.

10. The heat shrinkable film of claim 1, wherein the film comprises an A-B-A layered structure comprising surface A layers and a core B layer.

11. The heat shrinkable film of claim 1, wherein the film has a glass transition temperature of up to 80°C.

12. The heat shrinkable film of claim 1, wherein the diol component comprises 50-85 mol% ethylene glycol.

13. The heat shrinkable film of claim 1, wherein the diol component comprises 10-30 mol% cyclohexane dimethanol.

14. The heat shrinkable film of claim 1, wherein the diol component comprises 5-25 mol% diethylene glycol.

15. The heat shrinkable film of claim 1, wherein the dicarboxylic acid component comprises 99-100 mol% terephthalic acid.

16. The heat shrinkable film of claim 15, wherein the dicarboxylic acid component comprises 0.05-0.8 mol% isophthalic acid.

17. The heat shrinkable film of claim 1, wherein the film is **characterized by** a shrink stress of less than 9.0 MPa at 85°C.

18. The heat shrinkable film of claim 17, wherein the film is **characterized by** a shrinkage velocity of up to 10% per second at 85°C.

19. The heat shrinkable film of claim 1, wherein the film has a molecular orientation angle in the main shrinkage direction of up to 2.0°.

20. The heat shrinkable film of claim 19, wherein the film has a molecular orientation angle in the main shrinkage direction of up to 1.5°.

21. A heat shrinkable film comprising a copolyester comprising a diol component and a dicarboxylic acid component,
wherein the diol component is selected from at least one member from the group consisting of ethylene glycol, diethylene glycol, neopentyl glycol, propylene glycol, polyethylene glycol, tetraethylene glycol, and cyclohexane dimethanol;
wherein the dicarboxylic acid component is selected from at least one member of the group consisting of isophthalic acid and terephthalic acid;
wherein 60-90 mol% of the copolyester is amorphous; and
wherein the film is **characterized by** a heat shrink curve corresponding to shrinkage percentage in a main shrinkage direction as a function of temperature hold for 10 seconds, the heat shrink curve **characterized by** a squared Pearson correlation coefficient of at least 0.95 at temperatures between 60°C and 95°C.
